# EUROPÄISCHE PATENTANMELDUNG

(11) **EP 2 275 986 A1**
(43) Veröffentlichungstag der Anmeldung: **19.01.2011**
(21) Anmeldenummer: 10168335.7
(22) Anmeldetag: 02.07.2010
(51) Int. Cl.: G06Q 30/00

(54) **Verfahren zur Darbietung einer Information**

(30) Priorität: 03.07.2009 DE 102009031865
(71) Anmelder: Deutsche Telekom AG, 53113 Bonn (DE)
(72) Erfinder: Küller, Jürgen, 53757 St. Augustin (DE)

(57) **Zusammenfassung**

Verfahren zur Darbietung von Information bezüglich einer Ware und/oder einer Dienstleistung über ein Ausgabemittel, insbesondere ein Display, eines Mobilfunkendgerätes (1), wobei mittels einer Aufnahmevorrichtung des Mobilfunkendgerätes (1) ein in Bezug zu der Ware und/oder Dienstleistung stehendes Zeichen (2), insbesondere ein QR-Code, aufgenommen wird, das eine Adresse einer Webseite umfassend Information bezüglich der Ware und/oder Dienstleistung enthält, wobei die Adresse der Webseite über das Mobilfunkendgerät angewählt wird, wobei bei der Anwahl der Webseite Identifikationsdaten übertragen werden, wobei den Identifikationsdaten zugeordnete Profildaten abgerufen werden, wobei die Profildaten Informationen zu einem dem Mobilfunkendgerät (1) zugeordneten Nutzer enthalten, wobei die Webseite anhand der Profildaten individuell ausgewählt oder anpasst wird und wobei die angepasste oder ausgewählte Webseite an das Mobilfunkendgerät (1) übertragen wird.

## Beschreibung

Die Erfindung betrifft ein Verfahren zur Darbietung von Information bezüglich einer Ware und/oder einer Dienstleistung über ein Ausgabemittel, insbesondere ein Display, eines Mobilfunkendgerätes, wobei mittels einer Aufnahmevorrichtung, insbesondere einer Kamera des Mobilfunkendgerätes, ein in Bezug zu der Ware und/oder Dienstleistung stehendes Zeichen, insbesondere ein Bar Code oder ein QR-Code, aufgenommen wird, das die Adresse einer Webseite umfassend Information bezüglich der Ware und/oder Dienstleistung enthält und wobei die Adresse der Webseite über das Mobilfunkendgerät angewählt wird. Die Erfindung betrifft auch ein Mobilfunkendgerät zur Umsetzung des Verfahrens.

Um potentielle Kunden anzusprechen und zum Kauf einer Ware oder Dienstleistung anzuregen, sind eine Vielzahl von Marketing-Maßnahmen bekannt. Dabei wird der Kontakt zum Kunden immer häufiger über die neuen Kommunikationsmedien, wie beispielsweise über das Internet, gesucht. Ebenso können potentielle Kunden über Informationen angesprochen werden, die auf ihr Mobiltelefon übertragen werden. Die modernen Mobilfunkendgeräte sind mittlerweile internetfähig und verfügen über entsprechende Zugangssoftware. Für den Mobiltelefon-Nutzer ist es somit relativ einfach, sich zu jeder Zeit Informationen aus dem Internet zu besorgen.

So macht sich modernes Marketing die für den Mobiltelefon-Nutzer vorteilhafte ständige Verfügbarkeit des Mobilfunkendgeräts zu nutze, indem potentielle Kunden mit Produktwerbung gezielt und mit hoher Erfolgswahrscheinlichkeit angesprochen werden, wenn sie sich gerade mit dem Produktangebot beschäftigen. Dies kann z.B. beim Lesen von Printmedien, Plakaten, Wechselanzeigen oder der Warenpräsentation in einem Shop sein. Um dem interessierten Kunden im Moment seines aktuellen Interesses auch weiterführende Informationen über das Produkt zur Verfügung stellen zu können, werden die präsentierten Waren- oder Dienstleistungsangebote immer öfter mit einem Hinweis auf eine Webseite versehen.

Über eine solche Webseite können vom Interessenten weiterführende Informationen zum präsentierten Produkt abgerufen werden. Besteht beim potentiellen Kunden ein Interesse an dem Produkt, wird er diese Möglichkeit wahrnehmen und über sein mitgeführtes Mobiltelefon weiterführende Information abrufen.

Für den Mobiltelefon-Nutzer ist es jedoch umständlich, die meist lange Adresse einer solchen Webseite in das Mobiltelefon mit seinen üblicherweise mehrfach belegten Tasten einzugeben. Dies kann den Nutzer vom Aufruf der Webseite abhalten. Moderne Mobilfunkendgeräte verfügen jedoch regelmäßig über eine Aufnahmevorrichtung, insbesondere in Form einer Kamera. Dabei hat sich die Qualität der in den Mobilfunkendgeräten verbauten Kameras in den letzten Jahren erheblich gesteigert. Mit einer entsprechenden Software ausgerüstet, können diese Mobilfunkendgeräte mit der Kamera aufgenommene Zeichen, insbesondere optoelektronische Codes, aufnehmen und über eine spezielle Software entschlüsseln. Ist die Präsentation einer Ware oder Dienstleistung mit der Adresse einer Webseite mit weiterführenden Informationen in Form eines solchen Codes versehen, bleibt dem Interessenten das lästige Eingeben der Adresse erspart.

Als Standard für dieses Verfahren hat sich der QR-Code durchgesetzt. QR-Codes sind zweidimensionale Barcodes, in denen unter anderem eine Internetadresse kodiert sein kann. Nimmt der Kunde einen QR-Code mit der Kamera seines internetfähigen Handys auf, übersetzt eine QR-Scanner-Software den zweidimensionalen Code in die Internetadresse. Die QR-Scanner-Software übergibt die decodierte Adresse an den Browser, welcher diese Webseite aufruft.

Als nachteilig wird im Allgemeinen angesehen, dass die übertragene Information bezüglich einer speziellen Ware oder Dienstleistung insofern ihr Ziel verfehlen kann, als sie allgemein für jeden Nutzer und nicht auf die persönlichen Bedürfnisse des jeweiligen Interessenten zugeschnitten ist.

Aufgabe der vorliegenden Anmeldung ist es daher, ein gattungsgemäßes Verfahren und ein System vorzuschlagen, das es auf einfache Weise ermöglicht, potenzielle Kunden mit einer individualisierteren Information bezüglich einer Ware und/oder Dienstleistung zu versorgen.

Diese Aufgabe wird durch das erfindungsgemäße Verfahren zur Darbietung von Information mit den Merkmalen von Anspruch 1 und das gattungsgemäße System nach Anspruch 14 gelöst. Bevorzugte Ausgestaltungen der Erfindung ergeben sich aus den abhängigen Ansprüchen.

Der Kern der Erfindung liegt darin, dass dem Anbieter der Webseite kundenindividuelle Informationen in der Form von Profildaten zur Verfügung gestellt werden, die der Anbieter als Grundlage nutzen kann, um eine daran angepasste Webseite zur Verfügung zu stellen. Dabei werden in dem erfindungsgemäßen Verfahren die bei der Anwahl der Webseite vom Mobilfunkendgerät übertragenen Identifikationsdaten, insbesondere die Telefonnummer ("CLI"), genutzt, um diesen Identifikationsdaten zugeordnete Profildaten abzurufen. Die Identifikationsdaten werden übertragen, da die Anwahl über das Mobilfunknetz geschieht. Die abgerufenen Profildaten enthalten Informationen zu einem dem Mobilfunkendgerät zugeordneten Nutzer, beispielsweise dem Käufer des Mobiltelefons oder dem Inhaber des Mobilfunkvertrages. Die Profildaten werden dem Anbieter der Webseite dann zur Individualisierung ihres Inhalts zur Verfügung gestellt, so dass der Anbieter die Webseite dem Inhalt der Profildaten anpassen und die angepasste Webseite an das Mobilfunkendgerät übertragen kann. Dabei kann diese Anpassung auch in der Auswahl einer bestimmten von mehreren Webseiten liegen, die den sich aus den Profildaten ergeben Anforderungen am nächsten kommt.

Mit dem erfindungsgemäßen Verfahren erhält der Nutzer durch einfache Aufnahme des Zeichens und dem folgenden Abruf der Webadresse eine individualisierte Webseite auf sein Mobilfunkendgerät. Die Erfindung lässt sich einfach umsetzen, da entsprechende Identifikationsdaten übertragen werden und zumindest beim Betreiber des Mobilfunknetzes, mit dem der Nutzer den Vertrag hat, auch zumindest einige verwertbare Profildaten, wie die Adresse, die das soziale Umfeld charakterisiert, und das Geschlecht, zur Verfügung stehen. Diese Profildaten können dem Anbieter anonymisiert zur Verfügung gestellt werden, der damit die Webseite an den potentiellen Kunden, der sich gerade mit einem seiner Produkte beschäftigt, anpassen kann.

Vorzugsweise wird auch die Kenntnis über vom Kunden bereits gekaufte oder nachgefragte Waren und/oder Dienstleistungen zur Erstellung der Profildaten genutzt. Profildaten können darüber hinaus auch aus Seitenaufrufen im Internet generiert werden, die einem Kunden zugeordnet werden können.

Vorzugsweise wird in den zugeordneten Profildaten nur ein Relevanzkriterium ausgewertet. Ein Relevanzkriterium ist ein auszuwertendes Merkmal, anhand dessen eine Auswahl oder Anpassung der Webseite erfolgt. Ist dies beispielsweise das Geschlecht des Kunden, wird nach der Zuordnung des Interessenten und der darauf folgenden Feststellung, welchem Geschlecht der Interessent angehört, eine hierauf abgestimmte, insbesondere vom Anbieter hierfür vorgehaltene Webseite an das Mobilfunkendgerät übermittelt. Beispielsweise erhält der als männlich identifizierte Interessent an einer Werbung eines Fitnessklubs eine Webseite übermittelt, die dessen Fitness-Programme für Männer mit den dazugehörigen Preisen enthält. Das jeweils für die Anpassung der Webseite heranzuziehende Relevanzkriterium wird somit anhand der präsentierten Ware und/oder Dienstleistung und des mit der Präsentation verbundenen Interesses des Anbieters ausgewählt. Im Weiteren werden Waren und/oder Dienstleistungen auch als Produkt bezeichnet.

Vorteilhafterweise wird die Webadresse automatisch nach Dekodierung des Zeichens, insbesondere des mittels der endgeräteigenen Kamera aufgenommenen optoelektronischen Codes, angewählt. Mit Druck auf den Auslöser erhält der Kunde seine individualisierte Webseite. Dabei lässt sich dieser Seitenaufruf durch zusätzliche im Code enthaltene Parameter einer bestimmten Printmedien-Ausgabe oder einem regionalisierten Angebot zuordnen und die angezeigte Webseite entsprechend den regionalen Gegebenheiten anpassen. So lassen sich beispielsweise für diese Variante des Codes vorgehaltene Zusatzinformationen, regionale Angebote und Incentives wie beispielsweise kostenlose Downloadangebote, auf das Handy übertragen.

Die individualisierte Webseite sieht der potentielle Kunde also genau dann, wenn er sich beispielsweise durch das Fotografieren eines QR-Codes auf einer Präsentation zusätzliche Information zu dem präsentierten Produkt einholen will. Er ist also gerade in diesem Moment an dem präsentierten Produkt interessiert bzw. kaufgeneigt. Da dem Interessenten nach dem Seitenaufruf die von ihm gewünschte Information dargeboten wird, ist ihm in der Regel nicht einmal bewusst, dass die angezeigte Webseite auf ihn zugeschnitten ist. Dabei kann sie auch die Informationen enthalten, die der Interessent auch ohne Individualisierung erhalten hätte, nur ergänzt um zusätzliche personalisierte Hinweise und/oder Kaufanreize.

Der dem Webseiten-Aufruf zugrundeliegende Code ist insbesondere der als Standard etablierte QR-Code. Grundsätzlich ist das erfindungsgemäße Verfahren jedoch mit jedem Zeichen durchführbar, das von einem Mobilfunkendgerät ausgelesen werden kann. Dabei ist das Zeichen nicht auf eine optische Darbietung beschränkt. Beispielsweise kann ein Zeichen auch mittels einer Kurzstrecken-Funkverbindung, insbesondere Bluetooth, RFID oder WLAN, von dem Mobilfunkendgerät aufgenommen werden. Ein Mobilfunkendgerät im Sinne dieser Anmeldung ist ein Gerät, das über eine Mobilfunkverbindung auf das Internet zugreift.

Vorzugsweise wird zur Auswahl oder Anpassung der Webseite das in den Profildaten ausgewertete bisherige Verhalten des Nutzers herangezogen. Hierzu zählen insbesondere sein Kaufverhalten, sein Nutzungsverhalten im Internet, beispielsweise seine bisherigen Internet-Anfragen oder Seitenaufrufe, sowie die hieraus bekannten Interessensgebiete. Aus diesen Daten lassen sich auf einfache Weise, insbesondere durch Kumulation des bisherigen Verhaltens, Profildaten generieren.

Die verfügbare Information zu den präsentierten Waren und/oder Dienstleistungen wird vorzugsweise untersucht, inwieweit sie gemäß des aus den Profildaten auswertbaren bisherigen Verhaltens des Interessenten für seine Kaufentscheidung relevant ist. Insbesondere wird untersucht, ob der identifizierte Interessent bisher bei reduzierten Preisen oder besonderen Angeboten gekauft hat, oder ob er Interesse an Bundle-Angebote zeigte. In solchen Fällen wird das bisherige Kaufverhalten des Interessenten für die Darbietung von entsprechenden Konditionen auf der individualisierten Webseite herangezogen.

Ein Relevanzkriterium für die Auswertung der Profildaten ist insbesondere, welche Informationen der Kunde bei seinen bisherigen Erkundigungen zu einem Produkt oder bei dessen Kauf herangezogen hat. Hierzu zählt insbesondere, ob er bisher eher an technischen Informationen zu einem Produkt oder an Sonderangeboten interessiert war. Ein anderes vorteilhaftes Kriterium ist die Wertigkeit der Produkte, für die sich der Kunde interessiert hat. Durch die Auswertung der Profildaten unter solchen Kriterien wird dem identifizierten Kunden eine Webseite dargeboten, die seinen individuellen Vorlieben Rechnung trägt und ihm eine Kaufentscheidung erleichtert. Der Interessent zieht demnach aus dem personalisierten Informationsangebot einen echten Mehrwert.

Vorzugsweise kann auf der individualisierten Webseite eine Verbindung zu einem bereits durch diesen Kunden gekauften Produkt herausgestellt werden, beispielsweise ob das präsentierte Produkt zusammen mit einem schon vom Interessenten gekauften oder genutzten Produkt einen Zusatznutzen generiert. Ein solcher Zusatznutzen ist insbesondere eine gemeinsame Verwendungsmöglichkeit oder sich einander ergänzende Eigenschaften dieser Produkte.

In einer bevorzugten Ausführungsform werden zur Anpassung der Webseite persönlichen Daten des Nutzers ausgewertet. Sind für den Anbieter persönliche Daten, wie beispielsweise Alter, Geschlecht oder Adresse des identifizierten Interessenten verfügbar, wird anhand eines dieser Relevanzkriterien eine Entscheidung über den Inhalt der personalisierten Webseite getroffen.

In einer besonders bevorzugten Ausführungsform werden zur Bewertung der abrufbaren Informationen in den Profildaten eine Mehrzahl von Relevanzkriterien ausgewertet, so dass das für den Aufbau einer den Profildaten entsprechenden Webseite erforderliche Wissen aus einer Vielzahl von Daten extrahiert werden kann. Über die derart individualisierte Webseite werden dann auf die jeweilige Situation möglichst genau abgestimmte Angebote zu der Ware und/oder Dienstleistung dargeboten.

In einer vorteilhaften Ausführungsform des erfindungsgemäßen Verfahrens werden die Profildaten des identifizierten Interessenten klassifiziert, also einem vorgegebenen Kundenprofil zugeordnet. Die Klassifizierung ermöglicht eine einfachere Individualisierung der über die Webseite abrufbaren Informationen zu dem präsentierten Produkt. Dabei können die einzelnen Relevanzkriterien je nach Produktkategorie unterschiedliche Wertigkeit erhalten.

Vorzugsweise sind die für ein vorgegebenes Kundenprofil erstellten individualisierten Webseiten bzw. deren individualisierte Komponenten in einer Datenbank hinterlegt. Der Aufwand zur Erstellung der individuellen Webseite wird hierdurch besonders gering gehalten, da die hinterlegten Komponenten bzw. die Webseite zur Darbietung nur noch aus der Datenbank abgerufen werden muss.

In einer bevorzugten Ausführungsform wird die Ware und/oder Dienstleistung von dem Mobilfunkunternehmen angeboten. Ist das Mobilfunkunternehmen der Anbieter des Produkts, oder ist das Anbieten des Produkts eine von dem Mobilfunkunternehmen durchgeführte Dienstleistung, sind die Kenntnis über das Interesse an dem Produkt und das Wissen über den Interessenten an einer Stelle vereint. Das erfindungsgemäße Verfahren kann somit auf besonders einfache Weise durchgeführt werden.

Dabei kann es sich nicht nur bei dem Anbieten eines Produkts, sondern auch bei dem Betreiben der Webseite um eine vom Mobilfunkunternehmen angebotene Dienstleistung für einen Dritten handeln.

In einer Variante ist der Anbieter nicht das Mobilfunkunternehmen, sondern es stellt dem Anbieter Profildaten des identifizierten Interessenten zur Verfügung. Für diesen Fall sind die jeweils geltenden Datenschutzbestimmungen zu beachten. Insbesondere werden dem Anbieter anonymisierte Profildaten über den Interessenten übermittelt. Der Anbieter nimmt anhand der vom Mobilfunkunternehmen übermittelten Profildaten die erfindungsgemäße Bewertung der zur Verfügung stehende Informationen zum Produkt vor, passt die bzw. wählt die Webseite entsprechend an und überträgt die Webseite an das Mobilfunkendgerät.

In einer weiteren vorteilhaften Ausführungsform wird über die angepasste oder ausgewählte Webseite eine Information zu einer bezüglich des präsentierten Produkts alternativen Waren und/oder Dienstleistungen dargeboten. Dem Interessenten können auf diese Weise Produkte präsentiert werden, deren Eigenschaften dem Produkt seines Interesses nahe kommen, ihm aber vielleicht gar nicht bekannt waren. Insbesondere können ihm auf seine Profildaten abgestimmte alternative Produkte dargeboten werden. Die alternativen Angebote können zu einem Kauf führen, selbst wenn das Produkt des ursprünglichen Interesses nicht vollständig den Erwartungen des Interessenten entspricht.

In einer bevorzugten Ausführungsform werden über die angepasste Webseite standortspezifische Informationen zu der Ware und/oder Dienstleistung dargeboten. Die individualisierte Webseite wird hierdurch zusätzlich regionalisiert. Beispielsweise wird dem Interessenten mitgeteilt, an welchen Standorten in seiner Nähe das ihn interessierende Produkt verfügbar ist, also angeschaut, vorgeführt und mitgenommen werden kann. Der Interessent kann auch Informationen über die für seinen Standort verfügbaren Vertriebswege und Lieferzeiten dargeboten bekommen.

Bei fehlender Übereinstimmung zwischen den vom Mobilfunkendgerät übermittelten Identifikationsdaten und den Profildaten wird eine Webseite ohne personalisierte Informationen zu der Ware und/oder Dienstleistung auf das Mobilfunkendgerät übertragen. Somit wird sichergestellt, dass der Interessent immer eine Antwort auf seinen Seitenabruf erhält und zumindest eine allgemeine Information zum Produkt dargeboten bekommt.

Vorzugsweise werden über die Webseite standortspezifische Informationen zu der Ware und/oder Dienstleistung dargeboten. Kann der Seitenaufruf auf einen Standort oder eine Region eingegrenzt werden, enthält die dargebotenen Webseite Informationen, die je nach ermittelter Position des Interessenten variieren können. Hierdurch ist es insbesondere möglich, den Interessenten auf ein in seiner direkten Nähe befindliches Angebot aufmerksam zu machen. Insbesondere kann die über die Webseite dargebotene Information von der Tageszeit, dem Wochentag, der Jahreszeit und/oder dem Wetter im Bereich der ermittelten Position abhängig sein.

Der Standort des Mobilfunkendgeräts wird insbesondere über im Code enthaltene standortspezifische Identifikationsmerkmale und/oder über standortspezifische Parameter der Mobilfunkverbindung bestimmt. Beispielsweise kann die Mobilfunkzelle, in der das Mobilfunkendgerät eingebucht ist, zur Standortbestimmung herangezogen werden. Auf diese Weise kann der Standort im optimalen Fall auf einen kleinen Umkreis begrenzt werden, so dass die über die Webseite dargebotenen Informationen zum Produkt möglichst genau auf den bestimmten Standort abgestimmt werden können.

In einer besonders bevorzugten Ausführungsform wird die angepasste Webseite dynamisch generiert. Eine Speicherung verschiedener Versionen der Webseite ist bei einem dynamischen Aufbau der Webseite nicht erforderlich. Die verfügbaren Informationen zu dem nachgefragten Produkt werden nach der Bewertung ihrer Relevanz für das Kundenprofil direkt, insbesondere durch ein Script, zu einer Webseite zusammengesetzt.

Das erfindungsgemäße Verfahren wird im Folgenden anhand der beiliegenden Zeichnungen beispielhaft näher erläutert. Es zeigen:
- **Figur 1**: Ein Schema einer einfachen Ausführungsform und
- **Figur 2**: eine Ausführungsform, bei der eine Internetverbindung über ein Gateway eines Mobilfunkproviders aufgebaut wird.

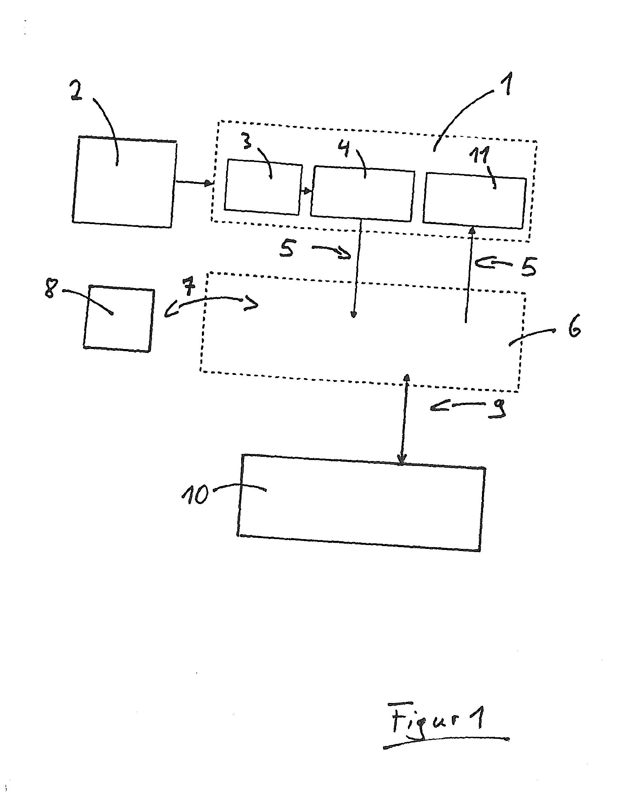

In dem Ausführungsbeispiel nach Figur 1 interessiert sich der Kunde für ein Produkt und möchte weiter Informationen zu diesem Produkt erhalten. Der Kunde ist in Besitz eines Mobilfunkendgeräts in Form eines internetfähigen Handys 1 mit integrierter Kamera und QR-Scanner-Software. Der Präsentation des Produktes ist ein QR-Code 2 mit einer codierten Internetadresse einer Webseite zugeordnet. Über die Webseite lässt sich die weiterführende Information zu dem präsentierten Produkt abrufen.

Bei dem Produkt handelt es sich beispielsweise um einen in einer Zeitung beworbenen MP3-Player. Die zur Werbung für den MP3-Player gehörende Produktinformation ist um den QR-Code 2 ergänzt, der die Adresse der Webseite enthält. Zum Aufruf der Webseite nimmt der Interessent über die im Handy 1 eingebaute Kamera 3 ein Bild des QR-Codes 2 auf. Daraufhin liest die QR-Scanner-Software 4 des Handys 1 insbesondere die im Image des QR-Codes 2 enthaltene Internetadresse sowie ggf. weitere Parameter aus. Das internetfähige Handy 1 ruft diese Internetseite über eine Mobilfunkverbindung 5 auf und überträgt dabei Identifikationsdaten.

In dem in Figur 1 gezeigten schematischen Ausführungsbeispiel wird die Mobilfunkverbindung 5 zwischen dem Handy 1 und einem Mobilfunkunternehmen 6 aufgebaut. Das Mobilfunkunternehmen 6 ließt die Identifikationsdaten, beispielsweise die CLI des Handys 1 aus. Über eine Verbindung 7 zu einer Profildaten enthaltenden Datenbank 8 werden vom Mobilfunkunternehmen 6 den Identifikationsdaten zugeordnete Profildaten abgerufen. Die abgerufenen Profildaten, beispielsweise das Alter des Interessenten werden zusammen mit dem Webseitenabruf über das Internet 9 an den Anbieter 10 des beworbenen MP3-Players gesendet. Die dem Handy 1 zu übermittelnde Webseite wird vom Anbieter 10 den Profildaten entsprechend, hier also altersgerecht ausgewählt oder angepasst und über das Internet 9 an das Mobilfunkunternehmen 6 gesandt. Von dem Mobilfunkunternehmen 6 wird die Webseite per Mobilfunkverbindung 5 an das Handy 1 weitergeleitet und auf dessen Display 11 dargestellt.

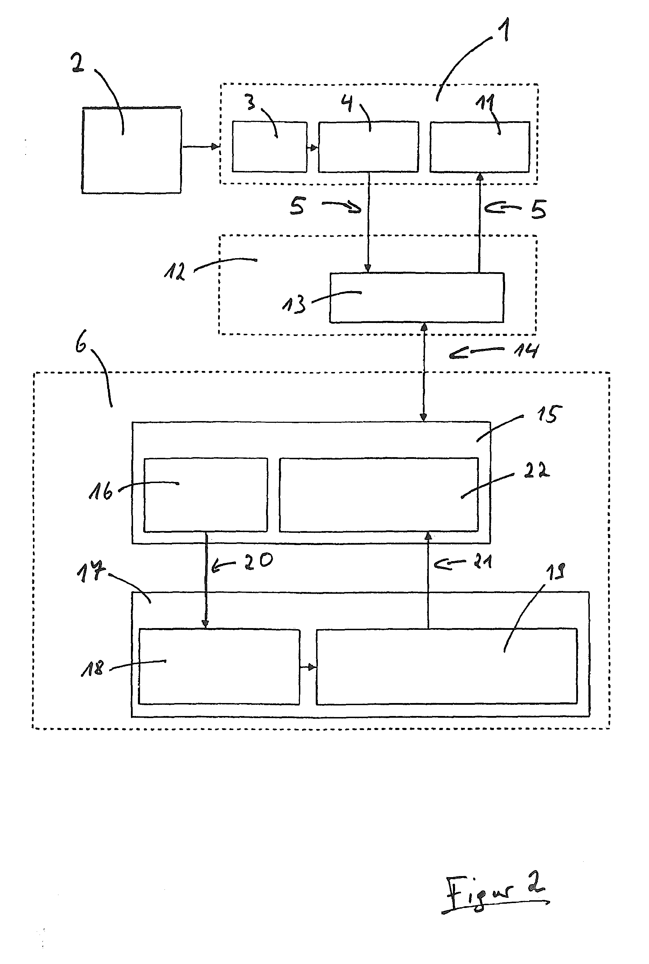

In dem in Figur 2 gezeigten Beispiel geht die Seitenanfrage per Mobilfunkverbindung 5 an einen Mobilfunk-Provider 12, dessen Internet-Gateway 13 die Anfrage in das Internet 14 überleitet und an den Server 15 des Mobilfunkanbieters 6 umleitet. Die Seitenanfrage wird darauf im Internet 14 zu dem Server 15 des Mobilfunkanbieters 6 geroutet.

In einem Schritt 16 liest der Server 15 die vom Handy 1 über die Mobilfunkverbindung 5 übermittelten und vom Mobilfunk-Provider 6 weitergeleiteten Identifikationsdaten aus und gibt sie an die Kundendatenbank 17 des Mobilfunkanbieters 10 weiter. Zur Identifikation des Handys 1 werden über die Mobilfunkverbindung 5 übermittelte Identifikationsträger des Mobilfunkendgeräts, vorzugsweise die IMSI, TMSI oder IMEI, ausgewertet.

Wird bei einem Abgleich 18 zwischen den vom Handy 1 übermittelten Identifikationsdaten und den in der Kundendatenbank 17 des Mobilfunkanbieters 6 vorhandenen Daten eine Übereinstimmung festgestellt, wird das die Webseite aufrufende Handy 1 den entsprechenden, in der Kundendatenbank 17 vorgehaltenen Profildaten zugeordnet. Mit dieser Verbindung von Identifikationsdaten und Profildaten wird der die Webseite aufrufende Interessent individualisierbar.

In dem oben geschilderten Beispielsfall wird die Seitenanfrage von dem Handy 1 eines Vertragskunden des Mobilfunkunternehmens 6 gestartet. Diese Verbindung zwischen dem Interessent und dem Seitenaufruf wird erkannt und die Zuordnung erfolgt. In dem hier geschilderten Beispiel ist das Mobilfunkunternehmen 6 auch der Anbieter der Webseite, so dass eine Weiterleitung von Daten an einen Dritten nicht erforderlich ist.

Anhand von relevanten Profildaten trifft eine Software 19 die Entscheidung über die am aussichtsreichsten zu einem Kauf führenden Informationen beziehungsweise Kaufanreize. Die hierfür erforderlichen Relevanzkriterien sind im Voraus festgelegt und die Profildaten werden dementsprechend ausgewertet. Für die Werbung des MP3-Players wurden hier als Relevanzkriterien das bisherige Nutzungsverhalten in Bezug auf im Internet abrufbare Musik und den Typ des Mobilfunkvertrags bestimmt. In diesem Fall lädt der Interessent regelmäßig aktuelle Pop-Musik aus dem Internet und hat einen Volumentarif für die Internetnutzung. Anhand dieses Parameter trifft die Software 19 die Entscheidung, den Inhalt der Webseite derart anzupassen, dass sie Informationen zu Abonnements zum Herunterladen von Pop-Musik enthält, kombiniert mit Internettarifen, die dem Interessenten ein günstigeres Herunterladen ermöglicht. Die getroffene Entscheidung wird von der Software 19 an den Server 15 des Mobilfunkanbieters 6 übermittelt.

Vorzugsweise sind die zwischen den Modulen 15 und 19 des Mobilfunkanbieters bestehenden Verbindungen 20 und 21 geschützte interne Datenverbindungen des Mobilfunkanbieters 6.

Ein dem Server 15 des Mobilfunkanbieters 6 zugeordnetes dynamisches Script 22 setzt die von der Software 19 getroffene Entscheidung um und baut die den relevanten Profildaten entsprechende Webseite auf, die über das Internet 14 an den Mobilfunkprovider 12 zurück gesendet wird.

Über das Internet-Gateway 13 des Mobilfunkproviders 12 wird die derart personalisierte Webseite per Mobilfunkverbindung 5 auf das internetfähige Handy 1 des Interessenten übermittelt. Das grafische Display 11 des Handys 1 zeigt in Folge die entsprechend den Profildaten angepasste Webseite an.

Falls den Identifikationsdaten nicht die gewünschten Profildaten zuzuordnen sind, beispielsweise weil als Relevanzkriterium das Alter des Interessenten ausgewählt wurde, hierzu aber keine Informationen vorliegen, generiert das Script 22 im Internet-Server 15 des Mobilfunkanbieters 6 vorzugsweise eine Webseite ohne personalisierte Inhalte. Diese Webseite enthält dann gegebenenfalls anhand der übermittelten Parameter ausgesuchte regionale Informationen zu dem präsentierten Produkt.

## Patentansprüche

1. Verfahren zur Darbietung von Information bezüglich einer Ware und/oder einer Dienstleistung über ein Ausgabemittel, insbesondere ein Display, eines Mobilfunkendgerätes (1),
wobei mittels einer Aufnahmevorrichtung des Mobilfunkendgerätes (1) ein in Bezug zu der Ware und/oder Dienstleistung stehendes Zeichen (2), insbesondere ein QR-Code, aufgenommen wird, das eine Adresse einer Webseite umfassend Information bezüglich der Ware und/oder Dienstleistung enthält,
wobei die Adresse der Webseite über das Mobilfunkendgerät (1) angewählt wird,
**dadurch gekennzeichnet,**
**dass** bei Anwahl der Webseite Identifikationsdaten übertragen werden,
**dass** den Identifikationsdaten zugeordnete Profildaten abgerufen werden, wobei die Profildaten Informationen zu einem dem Mobilfunkendgerät (1) zugeordneten Nutzer enthalten,
**dass** die Webseite anhand der Profildaten individuell ausgewählt oder anpasst wird und
**dass** die angepasste oder ausgewählte Webseite an das Mobilfunkendgerät (1) übertragen wird.

2. Verfahren nach Anspruch 1,
**dadurch gekennzeichnet,**
**dass** die Profildaten persönliche Daten des Nutzers, beispielsweise Alter und/oder Geschlecht und/oder Informationen zum Kaufverhalten, enthalten.

3. Verfahren nach Anspruch 1 oder 2,
**dadurch gekennzeichnet,**
**dass** die Adresse automatisch nach Dekodierung des Zeichens angewählt wird.

4. Verfahren nach einem der vorherigen Ansprüche,
**dadurch gekennzeichnet,**
**dass** die Profildaten dem Anbieter der Webseite und/oder dem Anbieter der Ware und/oder Dienstleistung zur Verfügung gestellt werden.

5. Verfahren nach einem der vorherigen Ansprüche,
**dadurch gekennzeichnet,**
**dass** die Profildaten einem Kundenprofil zugeordnet sind.

6. Verfahren nach einem der vorherigen Ansprüche,
**dadurch gekennzeichnet,**
**dass** die Profildaten in einer dem Mobilfunkunternehmen (6) des Mobilfunkendgerätes zugänglichen Profildatenbank (8, 18) gespeichert sind.

7. Verfahren nach einem der vorherigen Ansprüche,
**dadurch gekennzeichnet,**
**dass** die Profildaten aufgrund zugänglicher Information aktualisiert werden.

8. Verfahren nach einem der vorherigen Ansprüche,
**dadurch gekennzeichnet,**
**dass** die Identifikationsdaten, insbesondere anonymisiert, an den Anbieter (10) der Webseite übertragen werden, wobei der Anbieter (10) der Webseite ihm zugängliche Profildaten abruft.

9. Verfahren nach einem der vorherigen Ansprüche,
**dadurch gekennzeichnet,**
**dass** die Ware und/oder Dienstleistung von dem Mobilfunkunternehmen (6) angeboten wird und/oder die Webseite von dem Mobilfunkunternehmen (6) betrieben wird.

10. Verfahren nach einem der vorherigen Ansprüche,
**dadurch gekennzeichnet,**
**dass** über die dem Inhalt der Profildaten angepasste Webseite eine entsprechend dem Nutzer individualisierte Information zu einer bezüglich der Ware und/oder Dienstleistungen alternativen Ware und/oder Dienstleistungen angeboten wird.

11. Verfahren nach einem der vorherigen Ansprüche,
**dadurch gekennzeichnet,**
**dass** über die dem Inhalt der Profildaten angepasste Webseite standortspezifische Informationen zu der Ware und/oder Dienstleistung dargeboten werden.

12. System zur Darbietung einer Information, insbesondere zur Durchführung eines Verfahrens der Ansprüche 1 bis 13, umfassend ein Mobilfunkendgerät (1) mit einer Aufnahmevorrichtung (3) zum Auslesen eines in Bezug zu einer Ware und/oder Dienstleistung stehenden Zeichens (2), insbesondere eines QR-Codes, wobei das Zeichen (2) eine Adresse einer Webseite enthält, die von einem Anbieter (6, 10) zum Abruf dargeboten wird und über die eine Information zu der Ware und/oder Dienstleistung abrufbar ist, wobei die in dem Zeichen (2) enthaltene Adresse mittels des Mobilfunkendgerätes (1) abgerufen wird, und ein Mobilfunkunternehmen (6), wobei das Mobilfunkunternehmen (6) mit einer Datenbank (8, 18) verbunden ist
**dadurch gekennzeichnet,**
**dass** das Mobilfunkunternehmen (6) derart mit dem Anbieter (6, 10) der Webseite zusammenwirkt, dass anhand vom Mobilfunkendgerät (1) übertragener Identifikationsdaten aus der Datenbank (8, 18) den Identifikationsdaten zugeordnete Profildaten abgerufen werden, wobei die Profildaten Informationen zu einem dem Mobilfunkendgerät (1) zugeordneten Nutzer enthalten, dass die Profildaten dem Anbieter (6, 10) der Webseite zur Verfügung gestellt werden, dass der Anbieter (6, 10) die Webseite dem Inhalt der Profildaten anpasst oder auswählt und dass die angepasste oder ausgewählte Webseite an das Mobilfunkendgerät (1) übertragen wird.
